# EUROPEAN PATENT SPECIFICATION

(11) **EP 2 706 950 B1**
(45) Date of publication and mention of the grant of the patent: **04.07.2018**
(21) Application number: 12725304.5
(22) Date of filing: 11.05.2012
(51) Int. Cl.: A61C 8/00

(54) **INSERTION TOOL**
EINFÜHRUNGSWERKZEUG
OUTIL D'INSERTION

(30) Priority: 13.05.2011 EP 11003979
(43) Date of publication of application: 19.03.2014
(73) Proprietor: Straumann Holding AG, 4002 Basel (CH)
(72) Inventor: COURVOISIER, Stéphane, 4002 Basel (CH); GUSTAFSSON, Emilia, 4002 Basel (CH); FAORO, Francisco, 4002 Basel (CH)
(74) Representative: Schaad, Balass, Menzl & Partner AG
(86) International application number: PCT/EP2012/002048
(87) International publication number: WO 2012/156064

(56) References cited:
- EP-A1- 1 929 975
- WO-A1-93/20773
- US-A1- 2006 131 906

## Description

The present invention relates to an insertion tool for inserting a dental implant into the bone of a patient.

Dental implants are used to replace individual teeth or for anchoring more complex structures, which generally replace several or even all of the teeth. Many dental implants are initially fastened into the bone of a patient using external threads on the implant body. This provides the implant with primary stability during the osseointegration process.

In general, an insertion tool (or transfer piece) is used to screw the implant into the prepared implant site. This tool must engage with the implant in a way which enables torque to be transmitted from the tool to the implant.

In many implant systems the main bulk of torque transfer occurs via a geometrical fit between the implant and the insertion tool.

In such systems, the implant comprises either an internal or external anti-rotation means. This has a non-circular cross-section, e.g. polygonal, which provides a number of sides angularly spaced about the longitudinal axis of the implant. These sides are referred to herein as anti-rotation surfaces.

The co-operating insertion tool comprises, at its distal end, a complementary anti-rotation means having at least one surface (referred to as a torque transmission surface) which matches the anti-rotation surface(s) of the implant. When the tool is inserted into or over the anti-rotation means of the implant, these surfaces align in a non-rotational manner which enables torque to be transmitted to the implant. The proximal end of the insertion tool is shaped for direct or indirect connection to a driving device, e.g. ratchet, dental hand piece, or for manual rotation. In general, when the tool connects directly to a driving device it is referred to as an insertion tool whereas when there is an intermediate connecting piece involved the tool in direct torque transmitting contact with the implant is often referred to as a "transfer piece". This invention relates to both types of component and hence the term "insertion tool" as used herein is intended to cover all devices designed for torque transmission that, in use, are in direct contact with the implant.

The anti-rotation means of the implant can be formed within a recess in the implant body or by a boss protruding from the implant. When the anti-rotation means of the implant is formed by a recess or a boss, the distal end of the insertion tool is formed by a bolt or recess respectively. In each case, the distal end of the insertion tool has torque transmission surfaces arranged and dimensioned to be aligned with the anti-rotation surfaces of the implant upon connection in order to transmit torque.

In many systems, the cross sectional contours of the anti-rotation means of the implant and insertion tool are identical. For example, the distal end of the insertion tool could have a square cross-section for cooperation with an implant bore comprising a section having an identical square cross-section. Other implant systems comprise anti-rotation means comprising e.g. hexagons or octagons.

It is also known for the cross-sectional contours of the implant and insertion tool to be non-identical as long as the anti-rotation means of both components comprise cooperating anti-rotation and torque transmission surfaces, e.g. a hexagonal insertion tool can be inserted into a triangular implant bore in a torque transmitting manner as three of the hexagon sides will align with the sides of the bore. Therefore, although the overall cross-sectional contours of the implant and insertion tool anti-rotation means may differ, each anti-rotation means is designed to match the other to the extent that, in use, at least one torque transmission surface is in alignment with an anti-rotation surface.

In any system, manufacturing tolerances mean that an exact fit between the implant and insertion tool is not possible. If, for example, the anti-rotation means of the insertion tool is formed by a bolt, this must be manufactured to be slightly smaller than the dimensions of the recess of the implant, such that it is possible to fit these components together. Alternatively, if the implant comprises a boss, this must be sized to fit within the recess of the insertion tool. Therefore, in practice there will always be a small amount of play between the two parts. The result of this is that the insertion tool can rotate slightly within (or around) the implant so that instead of full face-to-face contact between the anti-rotation and torque transmission surfaces there is edge-to-face contact.

This concentrates the applied force over a small area and can lead to local deformation of both the implant and insertion tool.

As a result, the insertion tool can get jammed within or over the implant, making separation difficult. In addition, since the anti-rotation means of the implant is often later used to rotationally fix an abutment or prosthesis relative to the implant, deformation of the implant's anti-rotation means can lead to increased rotational play between the implant and the abutment.

WO93/20773 discloses an insertion tool whose distal end can be expanded into closer contact with the implant bore by means of a screw. EP 1929975 discloses a screw driver having a flexible end which is compressed to fit within the screw head. US 2006/0131906 discloses a collet device for gripping an object to be worked. The object is clamped within a receiving recess whose diameter can be increased or decreased by longitudinal displacement of an actuating element.

The object of at least a preferred embodiment of the present invention is thus to provide an insertion tool which reduces the risk of deformation of the anti-rotation means, and more particularly jamming of the insertion tool in connection with the implant.

According to one aspect the present invention provides an insertion tool for co-operation with a dental implant, said implant having at least one anti-rotation surface, the insertion tool extending along a longitudinal axis and comprising at its distal end a resilient sleeve, said sleeve comprising at least one torque transmission surface and being adjustable between a first, rest position, and a second, stressed position, wherein the location of the at least one torque transmission surface is different in the first and second positions, the insertion tool further comprising an actuation means arranged to selectively engage with the sleeve in order to adjust this between the first and second positions, the tool being arranged such that, in use, adjustment of the sleeve from the first to second position enables a better contact between the at least one anti-rotation surface and the at least one torque transmission surface, characterised in that the actuation means comprises a cam shaft, said cam shaft having a non circular cross-section, the actuation means being arranged for rotational actuation, such that the sleeve is adjusted from the first to the second position by relative rotational movement of the actuation means while the actuation means is in axial alignment with the sleeve.

According to the present invention therefore, an insertion tool is provided in which the location of the torque transmission surface(s) relative to the longitudinal axis can be altered via expansion, compression, stretching etc of a resilient sleeve. This alteration is caused by the actuation means of the insertion tool, which can selectively apply pressure to the sleeve in order to elastically deform this from a first to a second position. The location of the torque transmission surface(s) when in the second position as compared to the first position results, in use, in closer contact with the anti-rotation surface(s) of the implant. Thus, torque can be transmitted to the implant via this improved engagement between the torque transmission surface(s) and the anti-rotation surface(s). Removal of the actuation force results in the resilient sleeve reverting to its first, natural position.

The insertion tool can thus be aligned with the implant while the sleeve is in its first position. This therefore enables an easy connection of the insertion tool to the implant. Once the insertion tool is in position, the actuation means can be used to move the sleeve into the second position, thus providing an improved fit between the parts for force transmission.

In this way, good surface to surface contact can be achieved between the torque transmission and anti-rotation surface(s) despite manufacturing tolerances. In addition, in the event that any distortion of the torque transmission surface(s) occurs, this does not result in jamming of the insertion tool as, prior to removal, the sleeve is returned to its first position, thus releasing the firm engagement between the anti-rotation and torque transmission surface(s) and easing removal of the insertion tool.

The term "resilient" is used herein to refer to the ability of an object to automatically return to its original shape after distortion or deformation. In other words, the sleeve of the present invention exhibits elastic or flexible properties, which enable this to be compressed, expanded or otherwise deformed by an outside force, such as applied by the actuation means. Once the outside force is removed however, the sleeve automatically returns to its former shape.

The compression, expansion or other deformation of the sleeve from the first to the second position results in a change in the location of the torque transmission surface. In most embodiments this change comprises a change in the radial location of the at least one torque transmission surface relative to the longitudinal axis. However in some embodiments this change may alternatively or additionally involve a change in angular orientation or change in length (i.e. spatial extent) of the torque transmission surface(s).

The insertion tool of the present invention can be designed for use with implants having either internal or external anti-rotation surfaces. When the insertion tool is designed for use with an implant having external anti-rotation surfaces the sleeve is shaped to fit around these surfaces and is compressed into the second position by the actuation means. Thus in such embodiments the at least one torque transmission surface is located on the interior surface of the sleeve. External implant anti-rotation surfaces most often take the form of a boss extending from the coronal end of the implant. This boss usually has a polygonal cross section such that the anti-rotation surfaces are planar, outwardly facing surfaces. In such instances the sleeve of the insertion tool may therefore comprise a blind hole or through hole which can be placed over and accommodate the implant boss. The interior walls of the cavity comprise at least one planar torque transmission surface for contacting an anti-rotation surface, and preferably comprise a plurality of planar torque transmission surfaces. In the first, rest position the sleeve does not engage or only loosely engages the implant boss. Upon actuation of the actuation means however the sleeve is compressed such that it tightens around the boss and forms an improved fit, preferably a friction and/or form fit, with this. Once the actuation means is disengaged the resilient sleeve automatically returns to its rest position, thus releasing the implant boss.

The majority of commercially available implants today however comprise an internal bore, the anti-rotation surface(s) being located within this bore. An insertion tool of the present invention designed for use with this type of implant must therefore comprise a sleeve having the at least one torque transmission surface on its exterior surface, such that this surface can be expanded (spread) into contact with the implant bore.

Preferably therefore the sleeve comprises an inner cavity for receiving said actuation means and an outer surface comprising the at least one torque transmission surface, wherein the sleeve is expandable between a first, rest position and a second, expanded position, the location of the torque transmission surface in the second position being arranged to enable, in use, better contact with the at least one anti-rotation surface of the implant.

The outer surface of the sleeve can thus be expanded from a first to a second position. This enables the insertion tool to selectively firmly engage with the anti-rotation surface(s) of the implant. The insertion tool can be inserted and removed from the implant bore while in the first position, thus preventing damage to or jamming with the anti-rotation surface(s). When it is desired to rotate the implant the actuation means is used to move the sleeve into the second, expanded position. The sleeve thus firmly engages with the anti-rotation surface(s) for torque transmission to the implant. After insertion of the implant the actuation means is disengaged from the sleeve, thus allowing this to return to the first position and enabling easy removal of the insertion tool from the implant. The cavity of the sleeve can be formed by a blind hole or a through hole.

In all embodiments the adjustment of the sleeve from the first to second position is caused by operation of the actuation means.

In systems not in accordance with the present invention the actuation means may be arranged for axial actuation. In such systems the sleeve is adjusted between first and second positions by relative movement of the actuation means along the longitudinal axis of the insertion tool. The actuation means can be arranged for direct axial actuation, i.e. the actuation means is operated via relative translational movement along the longitudinal axis of the insertion tool, such as by sliding. This results in an actuation means which is quick and simple to operate with one hand.

When the actuation means is axially activated, it is necessary for the sleeve to be aligned with the implant separately from the actuation means.

In accordance with the present invention the actuation means is designed for rotational actuation. Therefore the actuation means is rotated relative to the sleeve in order to adjust this from the first to the second position. In this way the actuation means and sleeve can be in axial alignment while the sleeve is in the first position. The actuation means (or sleeve) is then rotated in order to deform the sleeve and provide an improved torque transmitting engagement between the implant and insertion tool. This configuration simplifies operation of the insertion tool, as no additional alignment step between the sleeve and the actuation means is necessary. In some embodiments it is possible for the sleeve or actuation means to be rotated and locked in position prior to torque transmitting rotation of the tool, e.g. the actuation means could comprise a bayonet-type locking collar. However, according to a preferred embodiment, the tool is simply connected to the implant and rotated, as with prior art devices. The movement of the sleeve into the second position occurs automatically upon rotation of the tool. This prevents incorrect use of the tool due to human error, namely forgetting to actuate the actuation means. While, in some embodiments, it may be possible to transmit torque to the implant while the sleeve is in the first position the benefits of the present invention will not be realised. This is because, firstly, contact between the anti-rotation surface(s) and the torque transmission surface(s) will not be optimised and hence a high concentration of forces will occur and secondly it will not be possible to disengage the surfaces after torque transmission as the sleeve will already be in its rest position. Rotational actuation which occurs automatically upon rotation of the tool ensures that the sleeve will always be moved into the second position during use of the insertion tool.

Therefore, preferably, the tool is arranged such that the movement of the sleeve into the second position occurs automatically upon torque transmitting rotation of the tool.

The automatic movement of the sleeve into the second position can be achieved by rotationally linking either the sleeve or actuation means to the driven means of the tool, such that rotation of the driven means results in rotation of either the sleeve or actuation means. The driven means is the part of the tool through which, in use, torque is supplied to rotate the tool. In other words, the driven means is shaped for direct or indirect connection to a driving device. The driven means can be, for example, a handle for manual rotation, a latch for connection to a dental handpiece or other motorised device, or a section having a non-circular contour for connection to a drive device, e.g. a ratchet or screwdriver. As only one of the sleeve and actuation means is rotationally linked to the driven means, rotation of the driven means enables relative rotation to occur between the sleeve and actuation means such that the sleeve can be adjusted between its first and second positions. As either the sleeve or actuation means is rotationally linked to the driven means, rotation of the driven means will always result in rotation of the rotationally linked component, hence ensuring that relative rotation between the sleeve and the actuation means occurs automatically during torque transmitting use of the tool.

It is possible for the driven means to be rotationally linked to either the sleeve or actuation means by bonding, moulding or some other form of permanent or temporary joining method. Preferably however, either the sleeve or actuation means is integrally formed with the driven means. By "integrally formed" it is meant that the sleeve or actuation means is formed in one piece with the driven means.

As mentioned above, when the actuation means is rotationally activated, this can be in axial alignment with the sleeve when this is in both the first and second position. In other words, it is the relative angular displacement between the actuation means and the sleeve that determines the sleeve's position and not the relative axial displacement.

Preferably the actuation means is arranged such that the relative rotation required to move the sleeve from the first to the second position is less than 360°, more preferably less than 90°. In a particularly preferred embodiment the relative rotation required between the sleeve and actuation means in order to move the sleeve between its first and second positions is less than 10°.

The actuation means comprises a cam shaft, said cam shaft having a non circular cross-section. The cam shaft can be hollow or solid and can either surround or be accommodated within the sleeve. Rotation of the cam shaft relative to the sleeve forces at least sections of the sleeve to expand outwards or compress inwards such that the sleeve is brought into better engagement with the implant for torque transmission. Once the driving force on the cam shaft is removed, the resilient nature of the sleeve causes this to return to its rest position, thus releasing the firm engagement with the anti-rotation surface(s) and hence the insertion tool can be easily removed.

Accordingly the sleeve and actuation means can be inserted and removed from the implant while in axial alignment, making operation easier. If desired however the sleeve can be replaced after use, such that a new sleeve is used for each implant. Additionally, if desired, the sleeve can be supplied separately to the actuation means such that, prior to use the actuation means must be axially aligned with the sleeve, either in or over the implant. Once aligned the actuation means is rotated relative to the sleeve to move this from the first to second position. After use, once the sleeve has been returned to its first position the actuation means and sleeve may be removed from the implant either in combination or separately.

In all embodiments it is preferred that the tool is arranged such that, in use, adjustment of the sleeve from the first to the second position enables a press- and/or form-fit between at least one torque transmission surface and at least one anti-rotation surface. In this way, in the second position, all rotational play between the insertion tool and the anti-rotation means of the implant is, for all practical purposes, eliminated. Full surface-to-surface contact is thus provided between at least the torque transmission surface(s) and anti-rotation surface(s) in use during torque transmission. In some implant designs the implant may have one set of anti-rotation surfaces which are contacted by the insertion tool during clockwise torque transmission and another set of anti-rotation surfaces contacted during anti-clockwise torque transmission. In other implant/insertion tool combinations, as discussed above, not all torque transmission surfaces align during use with the anti-rotation surfaces (e.g. hexagonal insertion tool and triangular implant bore). In these cases it is naturally only required by this preferred embodiment to form full surface-to-surface contact between those torque transmission surfaces and those anti-rotation surfaces through which it is intended to transmit torque, i.e. those surfaces "in use". In some embodiments, in use, adjustment of the sleeve from the first to the second position enables either the inner or outer surface of the sleeve to fully contact the implant in a press- and/or form-fit. Preferably it is the outer surface which is brought into a press- and/or form-fit with the implant.

In one embodiment the sleeve is formed by an elastomeric material, e.g. silicon. The adjustment of the sleeve is thus enabled simply by the elastic properties of the material. However, preferably the sleeve is formed by a metal or metal alloy such as stainless steel, titanium or titanium alloy, for example TAN (Ti-6Al-7Nb) or TAV (Ti-6Al-4V). Alternatively a ceramic material can be used.

Particularly when the sleeve is formed of a non-elastomeric material it preferably comprises at least one slit in the longitudinal direction. The use of such a sleeve enables this to be flexible in the radial direction while still providing a rigid torque transmission surface.

A plurality of slits can be provided, thus forming a plurality of arms. The outer or inner surface of each arm can comprise one or more torque transmission surfaces. These arms can either be in contact with one another when in the first position or separated by a gap, depending on the width of the slits.

Alternatively a single slit can be provided, thus creating a sleeve in the form of a split ring. Such a sleeve has an outer or inner surface which forms at least one torque transmission surface.

Preferably, in addition to the at least one slit and torque transmission surface(s), the sleeve further comprises at least one area of reduced thickness not complemented by the actuation means or the anti-rotation means of the implant. In other words the area of reduced thickness is one which is not necessary in order to allow the sleeve to fit within or around the actuation means or the implant anti-rotation means. Instead such areas increase the flexibility of the sleeve, enabling it to be brought into better contact with the anti-rotation surface(s) of the implant. Such areas are most beneficial in insertion tools wherein the actuation means is rotationally activated. The area of reduced thickness can be formed by at least one recess, such as an indent or channel, in the sleeve surface.

Preferably the at least one recess is formed on the surface of the sleeve which also comprises the at least one torque transmission surface. In other words, when the sleeve comprises one or more torque transmission surfaces on its exterior surface the at least one recess is also located on the exterior surface. Conversely, when the torque transmission surface(s) is (are) formed on the interior surface of the sleeve, the at least one recess is also preferably found on the interior surface. The recess itself does not form, in use, a torque transmission surface but instead acts as a hinge, or pivot point, to enable increased movement of the torque transmission surfaces. It is also possible of course for an area of reduced thickness to be formed by aligned recesses on both inner and outer surfaces. Preferably the at least one area of reduced thickness is located diametrically opposite a slit.

In one particularly preferred embodiment, the sleeve comprises a single, longitudinally extending slit and an outer surface comprising a plurality of torque transmission surfaces. The sleeve may also comprise an area of reduced thickness diametrically opposite the slit. A cam shaft is sized for accommodation within the sleeve and comprises a radially extending ridge. When the shaft is inserted into the sleeve this ridge is accommodated within the longitudinal slit. In this way, the sides of the ridge are adjacent to the walls of the slit. When the cam shaft is rotated one side of the ridge pushes against the wall of the sleeve, forcing this outwards. In some embodiments the sleeve is prevented from rotating with the cam shaft by close proximity to the anti-rotation surfaces of the implant. Thus the sleeve can only be moved into the second position once the insertion tool has been inserted into the implant bore or other similarly shaped device. However, in other embodiments the actuation means may further comprise a stop, against which one side of the sleeve slit abuts. The sleeve may be permanently attached to the stop, for example by bonding. The stop does not form part of the cam shaft and therefore in use the cam shaft rotates relative to the stop, pushing against the opposing side of the sleeve slit and forcing this to widen and the outer surface of the sleeve to expand outwards into good torque transmitting contact with the implant. In such embodiments the angular orientation of the torque transmission surface(s) can also differ between the first and second position. Preferably the cam shaft further comprises one or more radially extending protrusions which are accommodated in complementary grooves in the sleeve. Such protrusions provide further areas which can exert an outwards force on the sleeve during rotation of the actuation means.

In an alternative embodiment, the cam shaft may have a cross-section in the shape of a polygon, e.g. a triangle, square or star, and the cavity of the sleeve a matching cross-section. When the cam shaft is rotated relative to the sleeve therefore, the vertices of the polygonal cam shaft press against the sides of the sleeve cavity, causing the sleeve to expand outwards. In such embodiments the sleeve may again comprise a single slit or may alternatively comprise a plurality of slits. Thus, the sleeve does not need to fully enclose the cam shaft and the cross section of the cavity, defined by the inner surface of the sleeve, may be discontinuous. Alternatively, at least in embodiments in which the sleeve is elastomeric, it may comprise no slits. The sleeve may also comprise one or more area of reduced thickness, as described above.

A similar configuration could also be employed in insertion tools designed for cooperation with external implant anti-rotation means. Here a hollow cam shaft surrounds the sleeve. The internal surface of the cam shaft and external surface of the sleeve have matching polygonal cross-sections. As the cam shaft is rotated this presses against the sleeve vertices, compressing the sleeve into close engagement with the implant.

The torque transmission surfaces of the sleeve are designed to enable torque transmitting contact with an implant. In essence, the torque transmission surface(s) of the sleeve can be designed for torque transmitting contact, when in the second position, with any known implant anti-rotation means. Thus the precise shape of the torque transmission surfaces will be determined by the shape of the anti-rotation means of the implant with which the insertion tool is intended for use.

At its most simple, the torque transmission surface of the sleeve may be a conical or cylindrical smooth surface. Such a sleeve can be brought into frictional contact, when in the second position, with a similarly shaped section of an implant bore. However, preferably the sleeve comprises a plurality of torque transmission surfaces which together define a non-circular shape. These surfaces may be curved, however preferably the torque transmission surfaces are planar and may define a polygon, e.g. square, hexagon, octagon etc. Alternatively the torque transmission surfaces of the sleeve may be formed by grooves or protrusions for engagement with complementary protrusions or grooves of the implant.

In accordance with the present invention all the torque transmission surfaces of the insertion tool are located on the sleeve. In this way these surfaces can be brought into and out of close contact with the implant through selective operation of the actuation means, thus enabling both good torque transmission and ease of disconnection.

Although in some embodiments the sleeve may comprise additional elements, or be designed to extend along all or a significant portion of the length of the insertion tool, it is preferable that the sleeve is located only in the distal-most half, most preferably the distal-most quarter of the insertion tool. This keeps the cost of the sleeve to a minimum. Most preferably, the sleeve is dimensioned such that, when the insertion tool is aligned with the implant, the sleeve does not extend beyond the coronal most point of the implant.

In some cases the insertion tool may only be connected to the implant after this has been placed and partially inserted into the borehole. However, in many systems the insertion tool is used to transport the implant from its packaging to the implant site. In such systems it is very important that the implant is firmly secured to the tool during transportation, to prevent dropping of the implant, which can cause damage and/or contamination of the implant and poses an aspiration risk to the patient.

In some embodiments, particularly when the actuation means is activated automatically via rotation of the tool, additional axial security is preferably provided. Preferably therefore the insertion tool further comprises a means for axially securing the implant to the tool. This can be any known means, for example, a clamping screw that fastens to the interior bore of the implant. Preferably the insertion tool comprises resilient axial retention means for forming a snap connection to the implant.

A snap connection is achieved through the displacement and subsequent release of the resilient retention means in response to relative axial movement between the retention means and the implant. It is this release of the resilient element(s) which creates the "snap" or "click" and forms the axial retention. Thus, the axial retention provided by the snap connection is formed by the resilient retention means when it is in (or close to) its rest position and is released when this means is displaced. The resilient retention means is therefore biased to maintain its connection to the implant. The use of a snap connection between the implant and another component is known in the art, e.g. EP 1749501 and US13/409699.

Alternatively the resilient retention means may be designed to form a press, or friction, connection to the implant. In such embodiments the resilient means is displaced from its rest position during contact with the implant, thus creating a biasing force against the implant as the means attempts to return to its rest position. In contrast to a snap connection, there is no complementary geometry between the implant and retention means which enables this to return to (or close to) its rest position while connected to the implant.

Preferably the axial retention means comprises one or more resilient protrusions angularly spaced about the longitudinal axis of the insertion tool. In one embodiment a single protrusion is formed which extends around the entire circumference of the tool. In another embodiment a plurality of protrusions form resilient fingers. The one or more protrusion can be shaped to fit within an undercut formed within the implant bore or on the exterior surface of the implant. Alternatively the one or more protrusion may be designed to form a press fit with the internal bore or external surface of the implant. In a particularly preferred embodiment the one or more protrusion is located apical, i.e. distally, of the torque transmission surface(s) of the sleeve. The one or more protrusion can extend longitudinally and/or radially as required to create a snap or press fit with the implant.

The provision of resilient retention means to snap, or press, connect to the implant provides security against axial displacement. A snap connection further provides the user with physical feedback when the insertion tool has been correctly connected to the implant. The resilient retention means can be formed on the sleeve, actuation means, or other part of the insertion tool. In a preferred embodiment the resilient retention means are formed by a part of the insertion tool other than the sleeve, in order to ensure that the axial retention of the tool is not affected by the movement of the sleeve between its first and second positions. In a particularly preferred embodiment the resilient axial retention means is provided on the actuation means.

The cam shaft may comprise, at its distal end, a foot having a wider diameter than the sleeve cavity. This foot is not positioned within the cavity, but instead provides an abutment surface on which the sleeve can rest and thus prevents inadvertent removal of the sleeve from the actuation means. In some embodiments resilient fingers may be located on this foot to provide a snap or press connection to the implant.

As discussed above, in order to enable torque to be transmitted to the implant the insertion tool comprises, towards its proximal end, driven means for supplying torque to the tool. This can be a handle for manual rotation, a latch for connection to a dental handpiece or other motorised device, or a section having a non-circular contour for connection to a drive device, e.g. a ratchet. The non-circular contour can be polygonal in shape, e.g. octagonal, or comprise grooves and/or protrusions for engagement with the drive device.

It is preferred that the driven means is rotationally linked to, and more preferably integrally formed with, either the actuation means or the sleeve, such that rotation of the driven means results in rotation of either the sleeve or actuation means. In this way, upon use of the tool for torque transmission, the sleeve is automatically moved into the second position. In the preferred embodiments discussed above therefore, the cam shaft can be rotationally linked to or integrally formed with the driven means. Alternatively is possible for the sleeve to be rotationally linked to or integrally formed with the driven means in these embodiments.

Viewed from a further aspect the present invention provides a combination of a dental implant and an insertion tool, the dental implant comprising at least one anti-rotation surface, the insertion tool extending along a longitudinal axis and comprising at its distal end a resilient sleeve, said sleeve comprising at least one torque transmission surface and being adjustable between a first, rest position and a second, stressed position, wherein the location of the at least one torque transmission surface is different in the first and second positions, the insertion tool further comprising an actuation means arranged to selectively engage with the sleeve in order to adjust this between the first and second position wherein, in use, adjustment of the sleeve from the first to second position enables a better contact between the at least one anti-rotation surface and the at least one torque transmission surface characterised in that the actuation means comprises a cam shaft, said cam shaft having a non circular cross-section, the actuation means being arranged for rotational actuation, such that the sleeve is adjusted from the first to the second position by relative rotational movement of the actuation means while the actuation means is in axial alignment with the sleeve.

The insertion tool preferably has one or more of the preferred features discussed above. In particular it is preferred that only the resilient sleeve of the insertion tool contacts the anti-rotation surfaces of the implant. Preferably the torque transmission surfaces and anti-rotation surfaces each define an octagon. This means that the planes in which the torque transmission surfaces and anti-rotation surfaces respectively are located define an octagon, although the overall cross-section of the sleeve and/or implant anti-rotation means may form a different shape. In another preferred embodiment these surfaces are formed on grooves and protrusions respectively, i.e if the torque transmission surfaces are formed by grooves the anti-rotation surfaces are formed by protrusions and vice versa. Preferably, in the second position, a form fit and/or press fit is formed between at least one torque transmission surface and at least one anti-rotation surface. Preferably, the insertion tool is arranged such that, prior to activation of the actuation means, the sleeve rests in the first position while the anti-rotation surfaces and torque transmission surfaces are aligned. In other words, although the torque transmission and anti-rotation surfaces might lightly contact one another while the sleeve is in the first position, no radial force is applied by the sleeve to the anti-rotation means. This ensures that the insertion tool can be easily disconnected from the implant when desired.

Preferred embodiments of the present invention will now be described, by way of example only, with reference to the accompanying figures, in which:
- FIG 1A: shows a perspective view of an insertion device in accordance with the present invention;
- FIG 1B: shows a cross-section along line A-A of FIG 1A;
- FIG 2A: shows a cross-sectional schematic view of the insertion tool of FIGs 1 inserted into the bore of an implant in the first position;
- FIG 2B: shows the same cross-sectional schematic view as FIG 2A with the insertion tool in the second position;
- FIG 3A: shows a perspective view of an insertion tool in accordance with another embodiment of the present invention;
- FIG 3B: shows a cross-section along line A-A of FIG 3A;
- FIG 4A: shows a perspective view of an insertion tool which does not form part of the present invention when the sleeve is in the first position;
- FIG 4B: shows a perspective view of the insertion tool of FIG 4A when the sleeve is in the second position;
- FIG 4C: shows a schematic cross-sectional view along line A-A of FIG 4B;
- FIG 5A: shows a longitudinal cross section of the tool of FIG 4A;
- FIG 5B: shows a longitudinal cross section of the tool of FIG 4B;
- FIG 6A: shows a schematic cross-sectional view of an alternative embodiment of the insertion tool of the present invention inserted into an implant bore in the first position;
- FIG 6B: shows the same schematic cross-sectional view as FIG 6A in which the insertion tool is in the second position;
- FIG 7: shows an alternative cross-section along line A-A of FIG 3A; and
- FIG 8: Shows a further alternative cross-section along line A-A of FIG 3A.

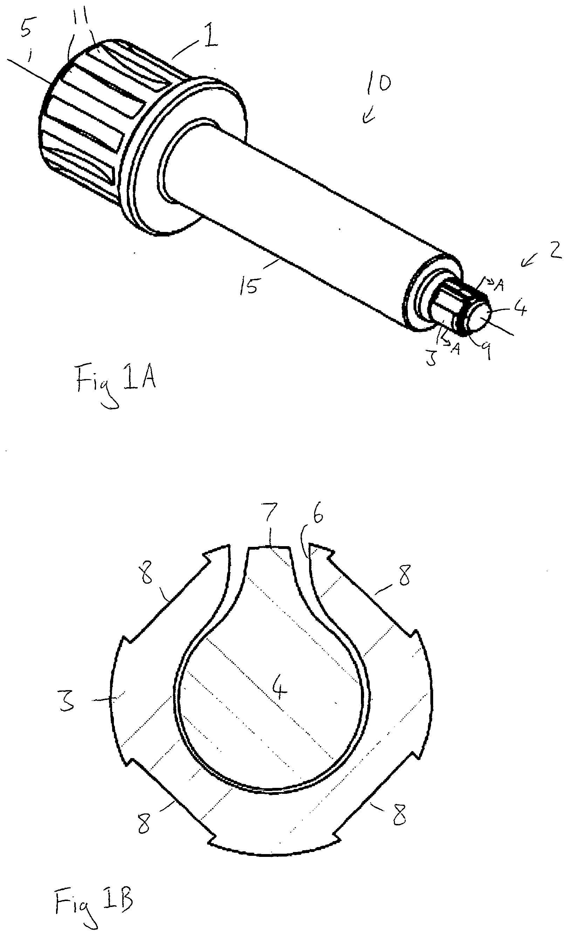

FIG 1A shows a perspective view of an insertion tool 10 in accordance with the present invention. The insertion tool 10 extends along a longitudinal axis 5. At its proximal end the tool comprises a driven means in the form of a handle 1. This can be connected to a ratchet or rotated by hand to supply torque to the insertion tool 1. A plurality of longitudinal grooves 11 on the handle 1 interact with a ratchet or provide a good gripping surface for the user. In other embodiments the proximal end may comprise a latch or other non-circular portion for connection to a dental handpiece or other motorised drive device. The handle 1 is integral with the main body 15 of the tool 10 which extends along the longitudinal axis 5. At its distal end the insertion tool 1 comprises a torque transmission means 2. In the present embodiment this takes the form of a resilient sleeve 3 which is attached to the outside of cam shaft 4, this shaft being integral with the main body 15 of the tool 10. Thus, in this embodiment the cam shaft 4 and handle 1 are integrally formed. The outer surface of sleeve 3 comprises a plurality of torque transmission surfaces, which in this embodiment are formed by grooves 8. Sleeve 3 is hollow and further comprises a longitudinal slit 6 extending along its length. Cam shaft 4 fits within the hollow interior of the sleeve 3 and comprises a ridge 7 that is accommodated within the slit 6, as can be seen most clearly in FIG 1B.

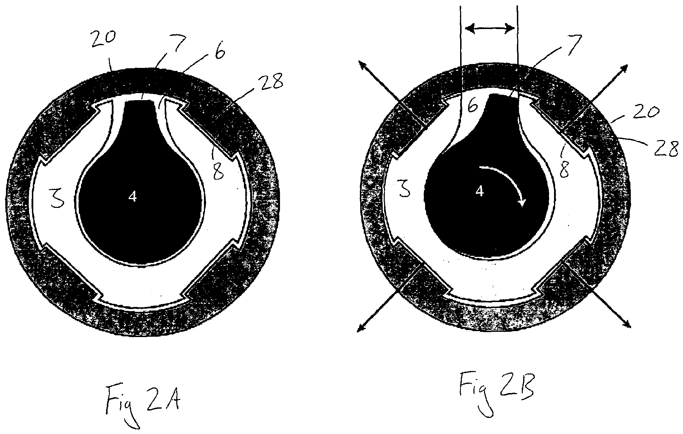

FIGs 2A and B demonstrate the operation of insertion tool 10. FIG 2A shows the distal end of insertion tool 10 inserted into the internal cavity of an implant 20 with sleeve 3 in the first position. The implant bore comprises protrusions 28 which form anti-rotation surfaces. Grooves 8 of the sleeve 3 are shaped to complement these protrusions 28 such that, upon insertion of the insertion tool 10 into the implant bore the protrusions 28 are housed within the grooves 8. Despite the complementary nature of the grooves 8 and protrusions 28 however the sleeve 3 is dimensioned such that a small gap exists between the protrusions 28 and grooves 8 such that the insertion tool 10 can be smoothly and easily inserted into the implant 20.

In FIG 2A the sleeve 3 is in its first, rest, position. Here the ridge 7 of the cam shaft 4 is accommodated within the slit 6 and is not exerting a force on this. No radial force is applied by the sleeve 3 to the implant bore.

When it is desired to transmit torque to the implant, handle 1 is rotated, which causes cam shaft 4 to rotate and ridge 7 to bear against one side of the slit 6. Given the resilient nature of the sleeve 3, this expands, pressing the torque transmission surfaces of the grooves 8 into close contact with the anti-rotation surfaces of the protrusions 28 such that torque can be transmitted between these two surfaces. This is shown schematically in FIG 2B. It should be noted that rotation in the other direction is also possible and would result in torque being transmitted to the implant 20 in a counter clockwise direction. In this case torque transmitting contact would be formed between different areas of the grooves 8 and protrusions 28, in particular on the opposing side surface of each. This embodiment is thus an example of a system in which different torque transmission and anti-rotation surfaces are used depending on the direction of rotation.

The expansion of the sleeve 3 creates a good surface to surface contact between the torque transmission and anti-rotation surfaces and thus a good force distribution and torque transmission is achieved.

When the torque force is removed, the sleeve 3 returns to its natural, unstressed position, shown in FIG 2A. The close contact with the implant protrusions 28 is released and the insertion tool 10 can be easily removed from the implant 20 without jamming.

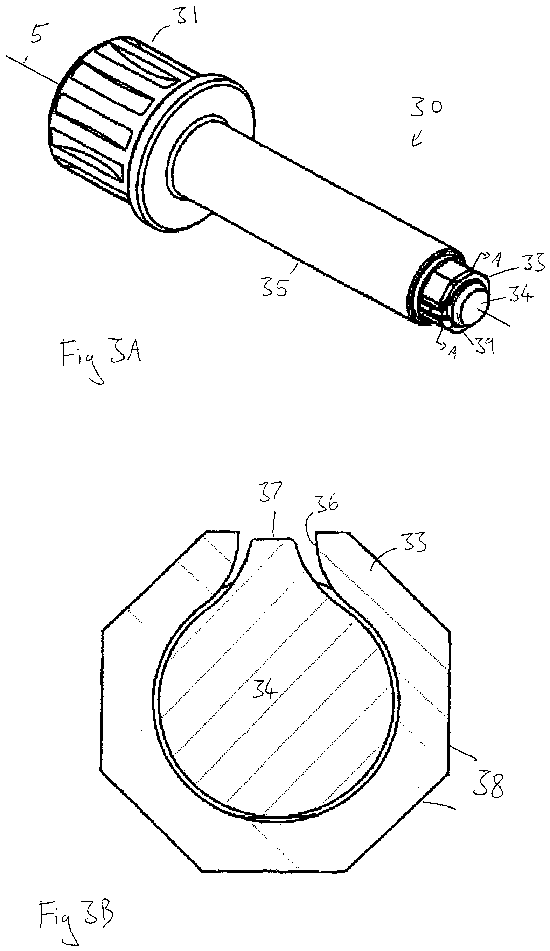

FIG 3A shows an alternative embodiment of the present invention. This insertion tool 30 is very similar to that shown in FIGs 1 and 2. The main body 35 of the insertion tool 30 comprises a handle 31 at the proximal end and a cam shaft 34 at the distal end. Resilient sleeve 33 is attached to the exterior of cam shaft 34 and comprises a longitudinal slit 36. Housed within this slit 36 is ridge 37 of the cam shaft 34. Insertion tool 30 differs from the insertion tool 10 of the first embodiment in that the outer surface of sleeve 33 comprises a number of planar surfaces 38 which define a polygon, in this case an octagon.

Insertion tool 30 is thus designed for cooperation with an implant having internal anti-rotation surfaces which define an octagon, or a square. The planar surfaces 38 of sleeve 33 can be brought into good torque transmitting contact with the implant by rotation of the cam shaft 34, thus applying force to one side of the slit 36 and expanding the sleeve 33 into its second position. When the insertion tool 30 is used with an implant having an anti-rotation means with an octagonal cross section each of the planar surfaces 38 will be brought into torque transmitting contact with the implant. In contrast, when the implant anti-rotation means has a square cross section, only four of the planar surfaces 38 will transmit torque to the implant in the second position.

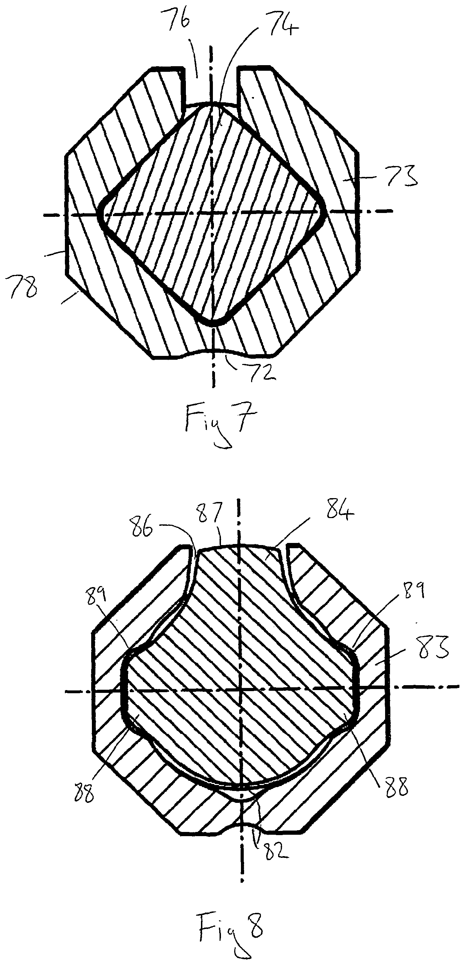

Many other forms of cam shaft are possible. Two further variants are shown in FIGs 7 and 8. Both of these figures show alternative cross-sections along line A-A of FIG. 3A.

In FIG 7 cam shaft 74 has a square cross-section. The inner surface of sleeve 73 matches this cross-section such that he cam shaft 74 is snugly accommodated within sleeve 73. Sleeve 73 comprises slit 76, and thus the inner surface of the sleeve 72 is discontinuous. The external surface of sleeve 73 comprises a plurality of planar surfaces 78 which define an octagon. Diametrically opposed to the slit 76 is recess 72. This creates an area of reduced thickness of the sleeve 73 not complementary to either the actuation means or implant anti-rotation means. This area acts to increase flexibility of the sleeve 73. FIG 7 shows the sleeve 73 in its first, rest position. Upon rotation of cam shaft 74 the vertices of the square are pressed into the internal sides of sleeve 73, forcing the sleeve to expand outwards and bringing planar surfaces 78 into torque transmitting contact with the anti-rotation surfaces of the implant. When the torque on the cam shaft 74 is removed, sleeve 73 returns automatically to its rest position, thus removing the radial force on the implant and aiding easy removal of the insertion tool.

FIG 8 shows a further alternative cross-section in which cam shaft 84 comprises a ridge 87 that is housed within slit 86 of resilient sleeve 83. In addition however cam shaft 84 comprises protrusions 88, having a smaller radial extent than ridge 87 and which are housed within corresponding grooves 89 on the internal surface of sleeve 83. When cam shaft 84 is rotated relative to the sleeve, ridge 87 pushes against one side of slit 86 and protrusions 88 similarly push against the sides of grooves 89. This forces the sleeve 83 to expand outwards into improved contact with the anti-rotation surfaces of the implant. Once again, as with FIG. 7, sleeve 83 comprises an area of reduced thickness in order to increase flexibility. In FIG 8 however aligned recesses 82 are placed on both inner and outer surfaces of the sleeve 83 in order to create this area.

The above embodiments provide examples of a rotationally activated actuation means. In all cases, the cam shaft 4, 34, 74, 84 and sleeve 3, 33, 73, 83 remain axially aligned and expansion of the sleeve 3, 33, 73, 83 from its first to second position is achieved via relative rotation. Because the device can be actuated without relative axial movement between these two components it is possible to axially fix these together. For example, cam shaft 4, 34, 74, 84 may at its distal end comprise foot 9, 39 having a larger diameter than the inner diameter of the sleeve 3, 33, 73, 83. This therefore provides a shoulder on which the sleeve 3, 33, 73, 83 can rest and prevents this from falling off the end of the insertion tool 10, 30. This foot 9, 39 may comprise resilient fingers (not shown) that form a snap or press fit connection with the implant to axially secure the tool.

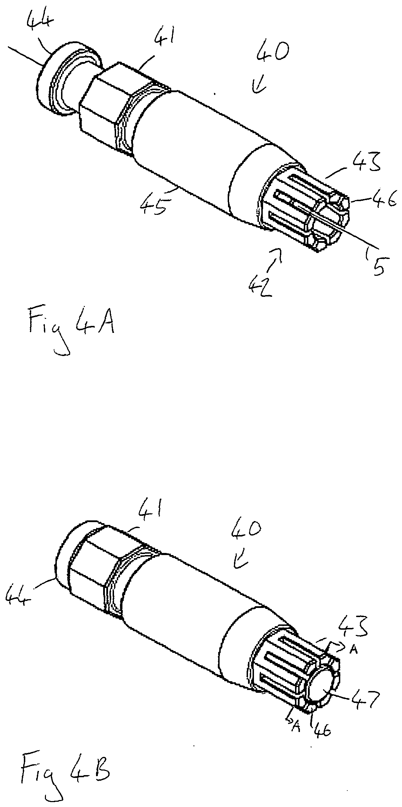

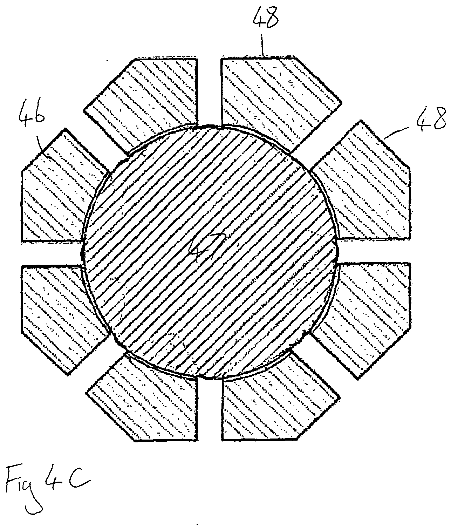

It is also possible for an insertion tool to have an axially activated actuation means. FIGs 4-5 show an example of such a tool, which does not form a part of the present invention.

Insertion tool 40 extends along longitudinal axis 5 and comprises at its distal end torque transmission means 42 in the form of a sleeve 43. Sleeve 43 comprises a plurality of longitudinal slits which form arms 46. The exterior surfaces of the arms 46 form a number of planar torque transmission surfaces 48 which together define an octagon, as can be seen from FIG 4C.

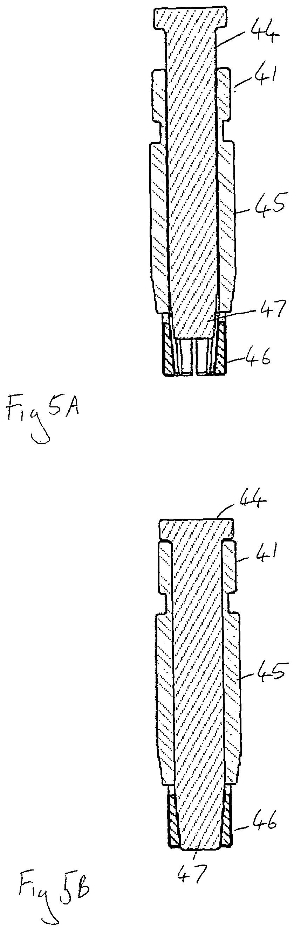

Sleeve 43 is hollow and integral with hollow main body 45 of the insertion tool 40. At its proximal end main body 45 comprises a driven means in the form of an octagonal section 41 which can be engaged by a torque wrench, dental handpiece etc to apply torque to the insertion tool 40. An actuating means in the form of a plunger 44 can be seen protruding from the proximal end of the insertion tool 40. This plunger is housed within the hollow main body 45, as can best be seen in FIGs 5A and B. At its distal end plunger 44 comprises a frustoconical stopper 47. When the plunger 44 is retracted, as shown in FIGs 4A and 5A, the arms 46 of sleeve 43 are in the first, or rest position. In this position the insertion tool 40 can be easily inserted into the implant bore. Indeed, arms 46 can even flex inwards slightly to aid insertion.

When it is desired to transmit torque to the implant, plunger 44 is depressed such that stopper 47 moves into axial alignment with the sleeve 43. As can be seen in FIGs 5A and 5B, the inner surface of arms 46 taper radially inwards towards the distal end of the sleeve 43. As the frustoconical stopper 47 is pushed down into the sleeve 43, it forces the arms 46 outwards, into the second position. This forces the outer surfaces of the arms into close contact with the anti-rotation means of the implant. While in this position the insertion tool 40 can be used to transmit torque to the implant. In addition the frictional fit formed between the arms 46 and the implant axially secure these two components together, enabling safe transportation of the implant to the implant site.

When it is desired to remove the insertion tool 40 the plunger 44 is simply pulled back such that the stopper 47 is no longer axially aligned with the arms 46, allowing them to return to their first position. This releases the close contact between the arms 46 and the implant and hence eases removal of the insertion tool 40.

Therefore, in accordance with this example the adjustment from first to second positions is achieved separately from the rotational action applied to transmit torque.

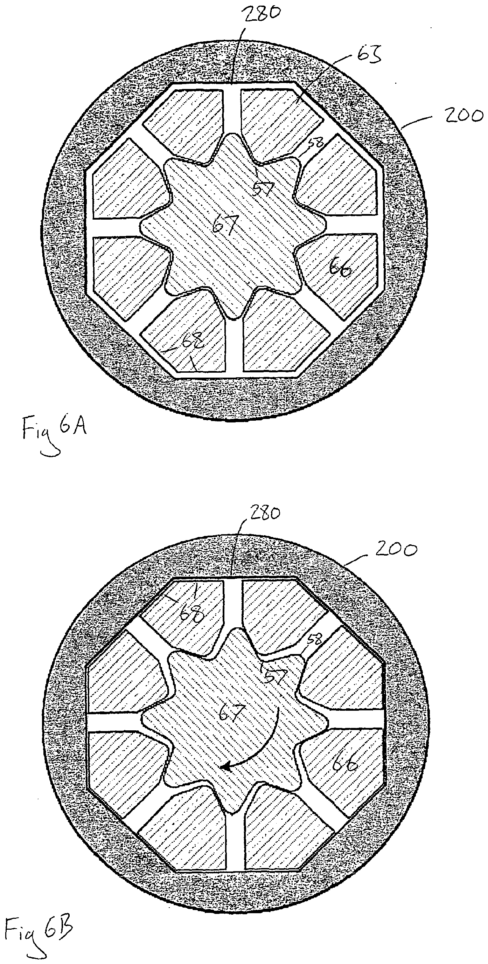

FIGs 6A and 6B show schematic cross-sections of a further embodiment of the present invention similar to the insertion tool shown in FIGs 4-5. Here, stopper 67 has a roughly star-shaped cross section, comprising a series of peaks 58 and troughs 57. The inner surfaces of arms 66 are shaped to fit within the troughs 57, however the outer surfaces form the same planar torque transmission surfaces 68 as the insertion tool 40 of FIGs 4 and 5.

FIG 6A shows the insertion tool 60 in the first, non torque transmitting position, in location within the bore of an implant 200. In accordance with this embodiment stopper 67 can always be axially aligned with the sleeve 63, and thus can more accurately be described as a cam shaft, although it may be possible to move this into and out of alignment with the sleeve. Removing the stopper 67 from the inner cavity of the sleeve 63 enables the inward flexibility of the arms 66 and can thus assist with insertion of the tool 60 into the implant. In the first position planar surfaces 68 are not in contact with the anti-rotation surfaces 280 of the implant 200.

In order to move the sleeve 63 into the second position relative rotation occurs between the stopper 67 and the sleeve 63 while they are in axial alignment. Torque is thus applied to either the sleeve or the stopper. This forces the arms 66 out of the troughs 57 of the stopper 67 and they are pushed radially outwards, as shown in Fig 6B. The planar surfaces 68 are thus pushed into torque tranmistting contact with the anti-rotation surfaces 280 of the implant 200.

The above described embodiments are for illustrative purposes only and the skilled man will realize that many alternative arrangements are possible which fall within the scope of the claims. In particular, the sleeve may be adapted to surround the boss of an implant. In such embodiments the actuating means is hollow and surrounds, at least in the second position, the sleeve. In a similar manner to shown above such insertion tools can be actuated via axial displacement, in which the hollow actuating means surrounds and compresses the sleeve, or rotation, in which the inner surface of the actuating means forms a cam surface that compresses the sleeve upon rotation.

In addition the torque transmission surface(s) can be any shape that complements the anti-rotation surface(s) of the implant such that torque transmission can occur. These surfaces can be planar or curved and can define a polygon or an irregular shape.

Where used within this specification, in accordance with conventional dental terminology, "apical" refers to the direction towards the bone and "coronal" to the direction towards the teeth. Therefore the apical end of a component is the end which, in use, is directed towards the jaw bone and the coronal end is that which is directed towards the oral cavity.

Unless expressly described to the contrary, each of the preferred features described herein can be used in combination with any and all of the other herein described preferred features.

Where technical features mentioned in any claim are followed by reference signs, those reference signs have been included for the sole purpose of increasing intelligibility of the claims and accordingly, such reference signs do not have any limiting effect on the scope of each element identified by way of example by such reference signs.

## Claims

1. An insertion tool (10, 40) for co-operation with a dental implant (20), said implant having at least one anti-rotation surface,
the insertion tool extending along a longitudinal axis (5) and comprising at its distal end a resilient sleeve (3, 43),
said sleeve comprising at least one torque transmission surface and being adjustable between a first, rest position, and a second, stressed position, wherein the location of the at least one torque transmission surface is different in the first and second positions, the insertion tool further comprising an actuation means arranged to selectively engage with the sleeve in order to adjust this between the first and second positions, the tool being arranged such that, in use, adjustment of the sleeve from the first to second position enables a better contact between the at least one anti-rotation surface and the at least one torque transmission surface, **characterised in that** the actuation means comprises a cam shaft (4), said cam shaft having a non circular cross-section, the actuation means being arranged for rotational actuation, such that the sleeve (3, 43) is adjusted from the first to the second position by relative rotational movement of the actuation means while the actuation means is in axial alignment with the sleeve.

2. Insertion tool (10, 40) as claimed in claim 1, wherein the tool is arranged such that the movement of the sleeve (3, 43) into the second position occurs automatically upon torque transmitting rotation of the tool.

3. Insertion tool (10, 40) as claimed in claim 2 wherein the tool further comprises a driven means for supplying torque to the tool, the sleeve (3, 43) or actuation means being rotationally linked to, preferably integrally formed with, said driven means such that rotation of the driven means results in rotation of either the sleeve or actuation means.

4. An insertion tool (10, 40) as claimed in any preceding claim, wherein the sleeve (3, 43) comprises an inner cavity for receiving said actuation means and an outer surface comprising said at least one torque transmission surface, wherein the sleeve is expandable between a first, rest position and a second, expanded position.

5. An insertion tool (10) as claimed in claim 4, wherein the cam shaft (74) has a cross-section in the shape of a polygon and the cavity of the sleeve (73) a substantially matching cross-section such that when the cam shaft is rotated relative to the sleeve, the vertices of the cam shaft press against the sides of the sleeve cavity, causing the sleeve to expand outwards.

6. An insertion tool (10, 40) as claimed in any preceding claim, wherein the sleeve (3, 43) comprises at least one slit (6) in the longitudinal direction.

7. An insertion tool (40) as claimed in claim 6, wherein the sleeve (3) comprises a plurality of slits which form a plurality of arms (46).

8. An insertion tool (10) as claimed in any preceding claim, wherein the sleeve (3) comprises a single, longitudinally extending slit (6) and an outer surface comprising a plurality of torque transmission surfaces, said cam shaft (4) being sized for accommodation within the sleeve and comprising a radially extending ridge (7) such that when the shaft is inserted into the sleeve said ridge is accommodated within the longitudinal slit.

9. An insertion tool (10, 40) as claimed in any preceding claim, wherein the sleeve (3, 43) comprises a plurality of planar torque transmission surfaces.

10. An insertion tool (10, 40) as claimed in any preceding claim, further comprising resilient axial retention means for forming a snap or press connection to the implant.

11. An insertion tool (10, 40) as claimed in any preceding claim, wherein the sleeve (3, 43) is formed by a metal or metal alloy.

12. A combination of a dental implant (20) and an insertion tool (10, 40),
the dental implant comprising at least one anti-rotation surface,
the insertion tool extending along a longitudinal axis (5) and comprising at its distal end a resilient sleeve (3, 43), said sleeve comprising at least one torque transmission surface and being adjustable between a first, rest position and a second, stressed position, wherein the location of the at least one torque transmission surface is different in the first and second positions,
the insertion tool further comprising an actuation means arranged to selectively engage with the sleeve in order to adjust this between the first and second positionwherein in use, adjustment of the sleeve from the first to second position results in a better contact between the at least one anti-rotation surface and the at least one torque transmission surface, **characterised in that** the actuation means comprises a cam shaft (4), said cam shaft having a non circular cross-section, the actuation means being arranged for rotational actuation, such that the sleeve (3, 43) is adjusted from the first to the second position by relative rotational movement of the actuation means while the actuation means is in axial alignment with the sleeve.

13. A combination as claimed in claim 12, comprising the insertion tool (10, 40) as claimed in any of claims 1 to 11.

## Patentansprüche

1. Ein Einsetzwerkzeug (10, 40) zum Zusammenwirken mit einem Zahnimplantat (20), wobei das Implantat wenigstens eine Verdrehsicherungsfläche aufweist,
wobei sich das Einsetzwerkzeug entlang einer Längsachse (5) erstreckt und an seinem distalen Ende eine elastische Hülse (3, 43) aufweist,
wobei die Hülse wenigstens eine Drehmomentübertragungsfläche umfasst und zwischen einer ersten Ruheposition und einer zweiten, gespannten Position verstellbar ist, wobei die Lage der wenigstens einen Drehmomentübertragungsfläche von der ersten und der zweiten Position verschieden ist, wobei das Einsetzwerkzeug weiter ein Betätigungsmittel umfasst, das angeordnet ist, um selektiv in die Hülse einzugreifen, um diese zwischen der ersten und der zweiten Position einzustellen, wobei das Werkzeug so angeordnet ist, dass während der Verwendung, die Einstellung der Hülse von der ersten zu der zweiten Position, einen besseren Kontakt zwischen der wenigstens einen Verdrehsicherungsfläche und der wenigstens einen Drehmomentübertragungsfläche ermöglicht, **dadurch gekennzeichnet, dass** das Betätigungsmittel eine Nockenwelle (4) enthält, wobei die Nockenwelle einen nicht kreisförmigen Querschnitt aufweist, und das Betätigungsmittel für eine Drehbetätigung so angeordnet ist, dass die Hülse (3, 43) von der ersten zu der zweiten Position durch eine relative Rotationsbewegung der Betätigungsmittel eingestellt wird, während das Betätigungsmittel in axialer Ausrichtung zu der Hülse ist.

2. Einsetzwerkzeug (10, 40) nach Anspruch 1, wobei das Werkzeug derart angeordnet ist, dass die Bewegung der Hülse (3, 43) in die zweite Position automatisch bei der Drehmoment übertragenden Rotation des Werkzeugs erfolgt.

3. Einsetzwerkzeug (10, 40) nach Anspruch 2, wobei das Werkzeug ferner ein Antriebsmittel zum Zuführen des Drehmoments auf das Werkzeug aufweist, wobei die Hülse (3, 43) oder das Betätigungsmittel drehbeweglich mit dem Antriebsmittel verbunden ist, vorzugsweise einstückig damit ausgebildet ist, so dass die Rotation des Antriebsmittels entweder zu einer Drehung der Hülse oder des Betätigungsmittels führt.

4. Ein Einsetzwerkzeug (10, 40) nach einem der vorhergehenden Ansprüche, wobei die Hülse (3, 43) einen inneren Hohlraum zur Aufnahme des Betätigungsmittels und eine äussere Oberfläche aufweist, welche die wenigstens eine Drehmomentübertragungsfläche umfasst, wobei die Hülse zwischen einer ersten Ruheposition und einer zweiten, ausgedehnten Position dehnbar ist.

5. Ein Einsetzwerkzeug (10) nach Anspruch 4, in dem die Nockenwelle (74) einen Querschnitt in der Form eines Polygons hat und der Hohlraum der Hülse (73) einen im Wesentlichen übereinstimmenden Querschnitt aufweist sodass, wenn die Nockenwelle relativ zu der Hülse gedreht wird, die Scheitelpunkte der Nockenwelle gegen die Seiten des Hülsenhohlraums drücken, was bewirkt, dass die Hülse nach aussen ausdehnt wird.

6. Ein Einsetzwerkzeug (10, 40) nach einem der vorhergehenden Ansprüche, wobei die Hülse (3, 43) in der Längsrichtung wenigstens einen Schlitz (6) aufweist.

7. Ein Einsetzwerkzeug (40) nach Anspruch 6, wobei die Hülse (3) eine Vielzahl von Schlitzen aufweist, welche eine Vielzahl von Armen (46) bilden.

8. Ein Einsetzwerkzeug (10) nach einem der vorangehenden Ansprüche, wobei die Hülse (3) einen einzelnen, sich in Längsrichtung erstreckenden Schlitz (6) und eine äussere Oberfläche enthält, die eine Vielzahl von Drehmomentübertragungsflächen aufweist, wobei die Nockenwelle (4) so dimensioniert ist, dass sie innerhalb der Hülse anordenbar ist und eine sich radial erstreckende Rippe (7) enthält, so dass, wenn die Welle in die Hülse eingeführt wird, die Rippe innerhalb des Längsschlitzes aufgenommen wird.

9. Ein Einsetzwerkzeug (10, 40) nach einem der vorhergehenden Ansprüche, wobei die Hülse (3, 43) eine Vielzahl von planaren Drehmomentübertragungsflächen aufweist.

10. Ein Einsetzwerkzeug (10, 40) nach einem der vorhergehenden Ansprüche, welches ferner ein elastisches axiales Rückhaltemittel zum Ausbilden einer Schnapp- oder Druckverbindung mit dem Implantat aufweist.

11. Ein Einsetzwerkzeug (10, 40) nach einem der vorhergehenden Ansprüche, wobei die Hülse (3, 43) aus einem Metall oder einer Metalllegierung gebildet ist.

12. Eine Kombination aus einem Dentalimplantat (20) und einem Einsetzwerkzeug (10, 40), wobei das Dentalimplantat wenigstens eine Verdrehsicherungsfläche aufweist,
wobei sich das Einsetzwerkzeug entlang einer Längsachse (5) erstreckt und an seinem distalen Ende eine elastische Hülse (3, 43) aufweist,
wobei die Hülse wenigstens eine Drehmomentübertragungsfläche umfasst und zwischen einer ersten Ruheposition und einer zweiten, gespannten Position verstellbar ist, wobei die Lage der wenigstens einen Drehmomentübertragungsfläche von der ersten und der zweiten Position verschieden ist,
wobei das Einsetzwerkzeug weiter ein Betätigungsmittel umfasst, das angeordnet ist, um selektiv in die Hülse einzugreifen, um diese zwischen der ersten und der zweiten Position einzustellen, wobei während der Verwendung, die Einstellung der Hülse von der ersten in die zweiten Position, zu einem besseren Kontakt zwischen der wenigstens einen Verdrehsicherungsfläche und der wenigstens einen Drehmomentübertragungsfläche führt,
**dadurch gekennzeichnet, dass** das Betätigungsmittel eine Nockenwelle (4) enthält, wobei die Nockenwelle einen nicht kreisförmigen Querschnitt aufweist, und das Betätigungsmittel für eine Drehbetätigung so angeordnet ist, dass die Hülse (3, 43) von der ersten zu der zweiten Position durch eine relative Rotationsbewegung der Betätigungsmittel eingestellt wird, während das Betätigungsmittel in axialer Ausrichtung zu der Hülse ist.

13. Kombination nach Anspruch 12, enthaltend das Einsetzwerkzeug (10, 40) nach einem der Ansprüche 1 bis 11.

## Revendications

1. Instrument d'insertion (10, 40) pour coopérer avec un implant dentaire (20), ledit implant ayant au moins une surface anti-rotation, l'instrument d'insertion s'étendant le long d'un axe longitudinal (5) et comprenant à son extrémité distale un manche élastique (3, 43), ladite manche comprenant au moins une surface de transmission de torque et étant ajustable entre une première position de repos et une seconde position en tension, la position de la au moins une surface de transmission de torque étant différente dans la première et la seconde position, l'instrument d'insertion comprenant en outre un moyen d'actionnement disposé pour s'engager sélectivement dans la manche pour ajuster celle-ci entre la première et la seconde position, l'instrument étant disposé de telle sorte que, lors de l'utilisation, un ajustement de la manche de la première à la seconde position permette un meilleur contact entre la au moins une surface anti-rotation et la au moins une surface de transmission de torque, **caractérisé en ce que** le moyen d'actionnement comprend un arbre à came (4), ledit arbre à came ayant une section transversale non circulaire, le moyen d'actionnement étant disposé pour un actionnement en rotation, de telle sorte que la manche (3, 43) est ajustée de la première à la seconde position par un mouvement de rotation du moyen d'actionnement pendant que le moyen d'actionnement est en alignement axial avec la manche.

2. Instrument d'insertion (10, 40) selon la revendication 1, l'instrument étant disposé de telle sorte que le mouvement de la manche (3, 43) dans la seconde position se passe automatiquement lors d'une rotation de transmission de couple de l'instrument.

3. Instrument d'insertion (10, 40) selon la revendication 2, l'instrument comprenant en outre un moyen d'entraînement pour fournir un couple à l'instrument, la manche (3, 43) ou un moyen d'actionnement étant lié en rotation à, préférablement formé de façon intégrale avec, ledit moyen d'entraînement de telle sorte qu'une rotation du moyen d'entraînement résulte en une rotation de la manche ou du moyen d'actionnement.

4. Instrument d'insertion (10, 40) selon l'une quelconque des revendications précédentes, la manche (3, 43) comprenant une cavité intérieure pour recevoir ledit moyen d'actionnement et une surface extérieure comprenant ladite au moins une surface de transmission de torque, la manche étant extensible entre une première position de repos et une seconde position en extension.

5. Instrument d'insertion (10) selon la revendication 4, l'arbre à came (74) ayant une section transversale de la forme d'un polygone et la cavité de la manche (73) ayant une section transversale sensiblement correspondante de telle sorte que quand l'arbre à came est tourné par rapport à la manche, les sommets de l'arbre à came appuient contre les côtés de la cavité de la manche, causant une extension de la manche vers l'extérieur.

6. Instrument d'insertion (10, 40) selon l'une quelconque des revendications précédentes, la manche (3, 43) comprend au moins une fente (6) dans la direction longitudinale.

7. Instrument d'insertion (10) selon la revendication 6, la manche (3) comprenant une multitude de fentes qui forment une multitude de bras (46).

8. Instrument d'insertion (10) selon l'une quelconque des revendications précédentes, la manche (3) comprenant une unique fente (6) s'étendant longitudinalement et une surface extérieure comprenant une multitude de surfaces de transmission de torque, ledit arbre à came (4) étant dimensionné pour tenir dans la manche et comprenant une arête (7) s'étendant radialement, de telle sorte que quand l'arbre est inséré dans la manche ladite arête est logée à l'intérieur de la fente longitudinale.

9. Instrument d'insertion (10, 40) selon l'une quelconque des revendications précédentes, la manche (3, 43) comprenant une multitude de surfaces de transmission de torque planes.

10. Instrument d'insertion (10, 40) selon l'une quelconque des revendications précédentes, comprenant en outre un moyen de rétention axial résilient pour former une connexion par clipsage ou par pression à l'implant.

11. Instrument d'insertion (10, 40) selon l'une quelconque des revendications précédentes, la manche (3, 43) étant formée par un métal ou un alliage métallique.

12. Combinaison d'un implant dentaire (20) et d'un instrument d'insertion (10, 40), l'implant dentaire comprenant au moins une surface anti-rotation, l'instrument d'insertion s'étendant le long d'un axe longitudinal (5) et comprenant à son extrémité distale une manche élastique (3, 43), ladite manche comprenant au moins une surface de transmission de torque et étant ajustable entre une première position de repos et une seconde position en tension, la position de la au moins une surface de transmission de torque étant différente dans la première et dans la seconde position, l'instrument d'insertion comprenant en outre un moyen d'actionnement disposé pour s'engager sélectivement dans la manche pour ajuster celle-ci entre la première et la seconde position, lors de l'utilisation un ajustement de la manche de la première à la seconde position résultant dans un meilleur contact entre la au moins une surface anti-rotation et la au moins une surface de transmission de torque, **caractérisée en ce que** le moyen d'actionnement comprend un arbre à came (4), ledit arbre à came ayant une section transversale non circulaire, le moyen d'actionnement étant disposé pour un actionnement en rotation, de telle sorte que la manche (3, 43) est ajustée de la première à la seconde position par un mouvement de rotation du moyen d'actionnement pendant que le moyen d'actionnement est en alignement axial avec la manche.

13. Combinaison selon la revendication 12, comprenant l'instrument d'insertion (10, 40) selon l'une quelconque des revendications 1 à 11.
